# EUROPEAN PATENT APPLICATION

(11) **EP 1 667 031 A2**
(43) Date of publication of application: **07.06.2006**
(21) Application number: 05025712.0
(22) Date of filing: 24.11.2005
(51) Int. Cl.: G06F 17/24, G06Q 10/00

(54) **HTML-e-mail creation system**

(30) Priority: 02.12.2004 JP 2004349799
(71) Applicant: NEC Corporation, Minato-ku Tokyo (JP)
(72) Inventor: Matsukawa, Hiroo, Minato-ku, Tokyo (JP)
(74) Representative: Baronetzky, Klaus

(57) **Abstract**

A HTML e-mail creation system for creating a HTML e-mail message includes a display unit and a control circuit. The control circuit extracts one or plural character strings expressing emotions from text-formatted document information; determines an overall emotion of the HTML e-mail document information based on the one or plural character strings; creates the HTML-formatted document information in which decoration corresponding to the determined overall emotion is applied to the one or plural character strings; and controls to displays the created HTML-formatted document information on the display unit.

## Description

### BACKGROUND OF THE INVENTION

### 1. Field of the Invention

The present invention relates to a HTML e-mail creation system, a communication apparatus, a HTML e-mail creationmethod, and a recording medium. In particular, the present invention relates to a HTML e-mail creation system, a communication apparatus, a HTML e-mail creation method, and a recording medium, in which decoration is applied to a character string expressing an emotion according to the contents of HTML e-mail document information upon input of the document information.

### 2. Description of the Related Art

In general, when an operator creates a hypertext markup language (HTML)-formatted e-mail message, the following method is used. The operator specifies in advance the type of decoration such as a font size, a color, and a display position, and then inputs sentences. Alternatively, upon completion of creation of all sentences, the operator selects a word to be decorated from the created sentences, applies decoration to the word, and repeats this operation for other words.

However, the above procedures involve a lot of time and effort to create one HTML-formatted e-mail message.

For example, JP 2000-181936 A (hereinafter, referred to as Patent Document 1) discloses a document feature extracting method in which a phrase is selected from a document, and a feature vector of the document is generated based on the intensity in use of the selected phrase. To be specific, the document feature extracting method disclosed in Patent Document 1 extracts a phrase (bigram) in which nouns are continuously appeared, and counts the number of times of the phrase appearances. Then, the document feature extracting method disclosed in Patent Document 1 generates a feature vector of the document from one phrase based on the number of times of its appearances.

Further, for example, JP 2004-157726 A (hereinafter, referred to as Patent Document 2) discloses a document creation method in which a HTML e-mail message is created by using a character string as a HTML for decoration. To be specific, upon creation of a HTML e-mail message on a screen, when the operator selects an input character string to be decorated and operates a function key, the portable telephone displays selectable pictographs on a displaypart thereof. When the operator selects a desired pictograph on the screen, the portable telephone adds the pictograph to the selected character string. Further, when the operator selects HTML e-mail while viewing the display screen, the portable telephone applies decoration, which corresponds to the added the pictograph, to the selected character string.

Further, for example, JP 11-110373 A (hereinafter, referred to as Patent Document 3) discloses a document conversion method in which image data corresponding to a word is extracted from an image storage part, and an e-mail message is created based on the extracted image data. To be specific, a document conversion device applies morphological analysis to an input sentence to extract each word. Further, the document conversion device searches the image storage part by using the extracted word as a key to obtain an image corresponding to the word, and creates a document to which the obtained image is attached.

Meanwhile, the operator generally uses words expressing emotions (words such as "thank you", "glad", "happy", and "sorry") to create a sentence for e-mail. If decoration corresponding to the contents of a created e-mail message is applied to the words expressing emotions contained in the e-mail document, those words can be visually displayed according to the contents of the e-mail document. Thus, such an e-mail message is useful to convey the operator's emotion to a counterpart.

However, in the technique of Patent Document 1, since a phrase that is to be a feature of the document is extracted based on the number of times of its appearances, a phrase expressing an emotion can be extracted by chance. Even when a phrase expressing an emotion is extracted by chance, the extracted phrase is not decorated. Therefore, in the technique of Patent Document 1, in order to apply decoration to a phrase (character string) expressing an emotion upon input of a HTML e-mail document, a hand operation must be carried out by the operator, and thus the troublesome task cannot be eliminated. The hand operation in this case includes the following operations. The operator uses a HTML editor to specify in advance a color of characters, a font size, and the like, with respect to a part to be decorated, and then inputs a sentence. Alternatively, the operator inputs all sentences, highlights a part to be decorated, and sets a color of characters and a font size therefor.

Further, in the technique of Patent Document 2, the operator selects a pictograph on the screen to add the selected pictograph to a desired character string by operating the screen by hand. Therefore, in the technique of Patent Document 2, in order to apply decoration to a phrase (character string) expressing an emotion upon input of a HTML e-mail document, the hand operation must be carried out by the operator, and thus the troublesome task cannot be eliminated.

Furthermore, in the technique' of Patent Document 3, a word is extracted from an input sentence, and an image corresponding to the extracted word is attached to a document without any preconditions irrespective of the contents of the e-mailmessage. Therefore, in the technique of Patent Document 3, in order to apply decoration to a phrase (character string) expressing an emotion upon input of a HTML e-mail document, the hand operation must be carried out by the operator, and thus the troublesome task cannot be eliminated.

### SUMMARY OF THE INVENTION

In view of above-mentioned circumstances, the present invention has been made, and has an exemplary feature to provide a HTML e-mail creation system, a communication apparatus, a HTML e-mail creation method, and a recording medium, in which decoration is automatically applied to a character string expressing an emotion according to the contents of a HTML e-mail document upon input of the document.

To achieve the above-mentioned exemplary feature, a first HTML e-mail creation system for creating a HTML e-mail message includes a display unit and a control circuit. The control circuit extracts one or plural character strings expressing emotions from text-formatted document, determines an overall emotion of HTML e-mail document information based on the one or plural character strings; creates HTML-formatted document information in which decoration corresponding to the determined overall emotion is applied to the one or plural character strings; and controls to display the created HTML-formatted document information on the display unit.

To achieve the above-mentioned exemplary feature, a second HTML e-mail creation system for creating a HTML e-mail message includes an emotion determination unit and a creation unit. The emotion determination unit extracts one or plural character strings expressing emotions from text-formatted document information, and determines an overall emotion of HTML e-mail document information based on the one or plural character strings. The creation unit creates HTML-formatted document information in which decoration corresponding to the determined overall emotion is applied to the one or plural character strings, and displays the created HTML-formatted document information on a display unit.

To achieve the above-mentioned exemplary feature, a first communication apparatus for creating a HTML e-mail message includes a transmission and reception circuit for transmitting and receiving a HTML e-mail message, a control circuit controlled by a program performed by a CPU, and a display unit for displaying HTML e-mail document information. The control circuit extracts one or plural character strings expressing emotions from text-formatted document information, determines an overall emotion of HTML e-mail document information based on the one or plural character strings; creates HTML-formatted document information in which decoration corresponding to the determined overall emotion is applied to the one or plural character strings; and controls to display the created HTML-formatted document information on the display unit.

To achieve the above-mentioned exemplary feature, a second communication apparatus for creating a HTML e-mail message includes an emotion determination unit and a creation unit. The emotion determination unit extracts one or plural character strings expressing emotions from text-formatted document information, determines an overall emotion of HTML e-mail document information based on the one or plural character strings. The creation unit creates HTML-formatted document in which decoration corresponding to the determined overall emotion is applied to the one or plural character strings, and displays the created HTML-formatted document information on the display unit.

To achieve the above-mentioned exemplary feature, a HTML e-mail creation method of creating a HTML e-mail message includes extracting one or plural character strings expressing emotions from text-formatted document information; determining an overall emotion of HTML e-mail document information based on the one or plural character strings; and creating HTML-formatted document information in which decoration corresponding to the determined overall emotion is applied to the one or plural character strings.

To achieve the above-mentioned exemplary feature, a recordingmediumwhich stores a program for creating a HTML e-mail message. The program cause a computer to execute the processings of extracting one or plural character strings expressing emotions from text-formatted document information; determining an overall emotion of HTML e-mail document information based on the one or plural character strings; and creating HTML-formatted document information in which decoration corresponding to the determined overall emotion is applied to the one or plural character strings.

Therefore, according to the present invention, a character string expressing an emotion is extracted from text-formatted document information, and a document overall emotion is determined based on the character string. Further, HTML-formatted document information is created in which a decoration pattern corresponding to the determined overall emotion is applied to the character string. Therefore, in the present invention, the operator only has to create text-formatted document information to automatically convert it to HTML-formatted document in which decoration is applied to the character string expressing an emotion. Further, according to the present invention, HTML-formatted sentences to which decoration is applied are displayed, so that the operator can see the HTML-formatted document information, which has been automatically converted, before transmitting the e-mail message.

### BRIEF DESCRIPTION OF THE DRAWINGS

These and other aspects, features, and advantages of the present invention will become more fully apparent from the following detailed description taken in conjunction with accompanying drawings. In the drawings:
FIG. 1 is a block diagram showing a configuration of an entire system including a communication apparatus to which an automatic e-mail creation method according to an embodiment of the present invention is applied;
FIG. 2 is a block diagram showing a configuration of a HTML e-mail creation circuit including a HTML e-mail creation unit contained in a control circuit shown in FIG. 1;
FIG. 3 is a flowchart showing an operation performed by the HTML e-mail creation unit shown in FIG. 2;
FIG. 4 is a diagram showing a configuration of an emotion classification keyword dictionary shown in FIG. 2;
FIG. 5A is a diagram showing a configuration example of a background color database included in a decoration pattern database shown in FIG. 2;
FIG. 5B is a diagram showing a configuration example of an individual decoration database included in the decoration pattern database shown in FIG. 2;
FIG. 6 is a diagram showing a configuration example of an emotion table in an initial state, which is allocated as a work area in an area of a RAM shown in FIG. 1;
FIG. 7A shows a main body of text-formatted e-mail;
FIG. 7B is a diagram showing a configuration example obtained when extracted words are written in the emotion table shown in FIG. 6;
FIG. 7C is a diagram showing a configuration example of the emotion table in which emotions and intensities are extracted and written corresponding to the words extracted from the main body of FIG. 7A; and
FIG. 7D shows a main body of HTML-formatted e-mail which is converted from the main body of text-formatted e-mail shown in FIG. 7A.

### DETAILED DESCRIPTION OF THE PREFERRED EMBODIMENT

An embodiment of the present invention will be described with reference to the drawings. In this embodiment, a case of using a portable terminal is taken as an example.

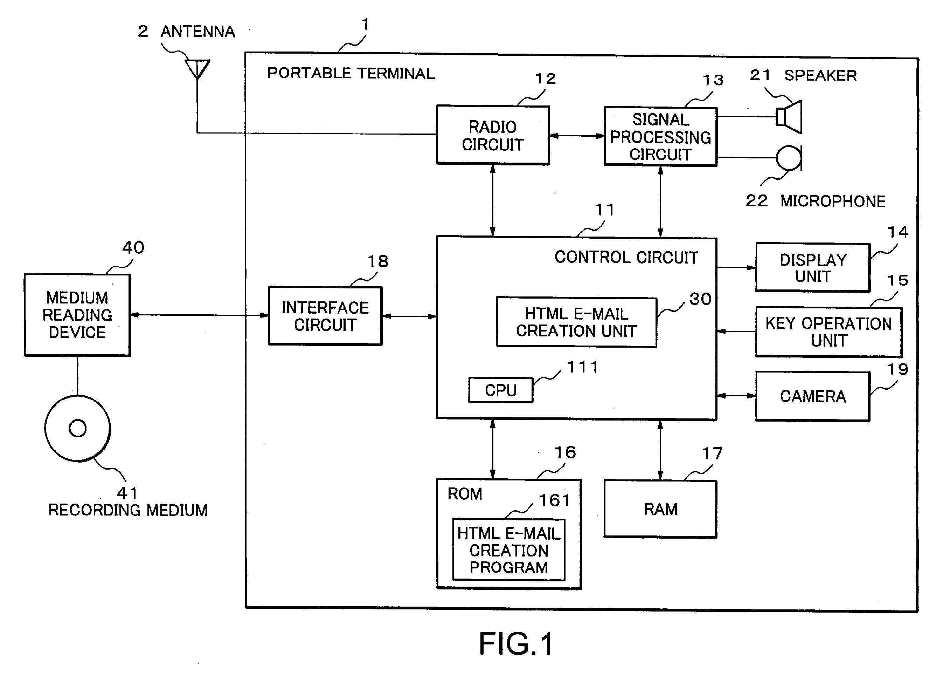

FIG. 1 is a block diagram showing a system including a communication apparatus to which an automatic e-mail creation method according to the embodiment of the present invention is applied.

FIG. 1 includes a portable terminal 1 serving as a communication apparatus, a medium reading device 40, and a recording medium 41.

The portable terminal 1 is a portable communication apparatus equipped with a communication function, such as a portable telephone, a personal digital assistant (PDA), or a personal handyphone system (PUS). The portable terminal 1 includes an antenna 2, a control circuit 11, a radio circuit 12, a signal processing circuit 13, a display unit 14, a key operation unit 15, a ROM 16, a RAM 17, an interface circuit 18, a camera 19, a speaker 21, and a microphone 22.

The antenna 2 exchanges data such as audio data and media data through a radio network (not shown). In this embodiment, the antenna 2 may be a nondirectional antenna such as a whip antenna, a rod antenna, a helical antenna, or a patch antenna, or may be a directional antenna such as a dipole antenna or an inverted-F antenna.

The radio circuit 12 exchanges data with other apparatuses through the antenna 2 under the control of the control circuit 11.

The signal processing circuit 13 processes signals to be transmitted to the radio circuit 12 or signals received from the radio circuit 12, under the control of the control circuit 11.

The key operation unit 15 includes various keys and buttons, and accepts, under the control of the control circuit 11, various key operations performed by an operator.

The display unit 14 (for example, a liquid crystal panel) displays various pieces of information under the control of the control circuit 11.

The control circuit 11 operates according to a program stored in the ROM 16 or the RAM 17, which is executed by a central processing unit(CPU). Further, the control circuit 11 controls the radio circuit 12, the signal processing circuit 13, the display unit 14, the key operation unit 15, the interface circuit 18, and camera 19.

The ROM 16 is a rewritable nonvolatile memory such as a flash memory and an electronically erasable and programmable read only memory (EEPROM). The ROM 16 is connected to the above-described control circuit 11, and stores data such as character fonts and pictographs which are used to display received character messages (hereinafter, referred to as "e-mail") and various pieces of information. The ROM 16 further stores various programs including a HTML e-mail creation program 161. The ROM16 further stores an emotion classification keyword dictionary 104 (described later) and a decoration pattern database 105 (described later).

The RAM 17 is a volatile memory such as a random access memory (RAM). The RAM 17 is connected to the above-described control circuit 11, and records data of received e-mail and data of images. The RAM 17 includes an image recording unit for recording data of photographic images photographed by the camera 19 and a character recording unit for recording character data such as transmitted and received e-mail and addresses (the image recording unit and the character recording unit may constitute a telephone book). Further, the RAM 17 is used as a work area when the control circuit 11 operates.

The camera 19 photographs landscapes, human figures, and the like. In this embodiment, a digital camera using a charge coupled device (CCD) is used as the camera 19.

The speaker 21 outputs audio.

The microphone 22 inputs audio, surrounding sounds, and like.

The control circuit 11 controls the entire portable terminal 1. The control circuit 11 includes a CPU 111 and a HTML e-mail creation unit 30. The HTML e-mail creation unit 30 operates according to a program executed by the CPU 111. The HTML e-mail creation unit 30 creates HTML e-mail by executing the HTML e-mail creation program 161 stored in the ROM 16.

The interface circuit 18 exchanges data with the medium reading device 40 under the control of the control circuit 11. Therefore, in this embodiment, the interface circuit 18 is used as an interface for storing in an area in the ROM 16, the HTML e-mail creation program and the like stored in the recording medium 41.

The medium reading device 40 may be, for example, a CD-ROM drive device, a rewritable drive device, or a DVD burning drive device, which can read the recording medium 41.

The recording medium 41 may be a CD-ROM, a CD-R, or a DVD, for example. In the recording medium 41, the HTML e-mail creation program, the emotion classification keyword dictionary, and the decoration pattern database are written in advance.

When the operator of the portable terminal 1 desires to use a service of HTML e-mail creation, the operator needs to install in advance the HTML e-mail creation program written in the recording medium 41 to the portable terminal 1. To be specific, the operator sets the recording medium 41 in the medium reading device 40, and instructs through the key operation unit 15 to install the HTML e-mail creation program, which is written in the recording medium 41. Then, the control circuit 11 reads the HTML e-mail creation program, the emotion classification keyword dictionary, and the decoration pattern database through the medium reading device 40. The control circuit 11 stores the read HTML e-mail creation program, emotion classification keyword dictionary, and decoration pattern database in the ROM 16. Note that the installation of the HTML e-mail creation program, the emotion classification keyword dictionary, and the decoration pattern database may not need to be performed by the user after purchase of the portable terminal 1, but may be performed by the manufacturer of the portable terminal 1 to store them at the factory shipment of the portable terminal 1. Alternatively, dealers of the portable terminal 1 may install and store the HTML e-mail creation program, the emotion classification keyword dictionary, and the decoration pattern database in the ROM 16 at the time of sale. Alternatively, service providers install in advance the HTML e-mail creation program, the emotion classification keyword dictionary, and the decoration pattern database, which are written in the recording medium 41, in a server device (not shown). Then, the user may download the HTML e-mail creation program, the emotion classification keyword dictionary, and the decoration pattern database in the portable terminal 1 from the server device through the antenna 2, and write them in the ROM 16.

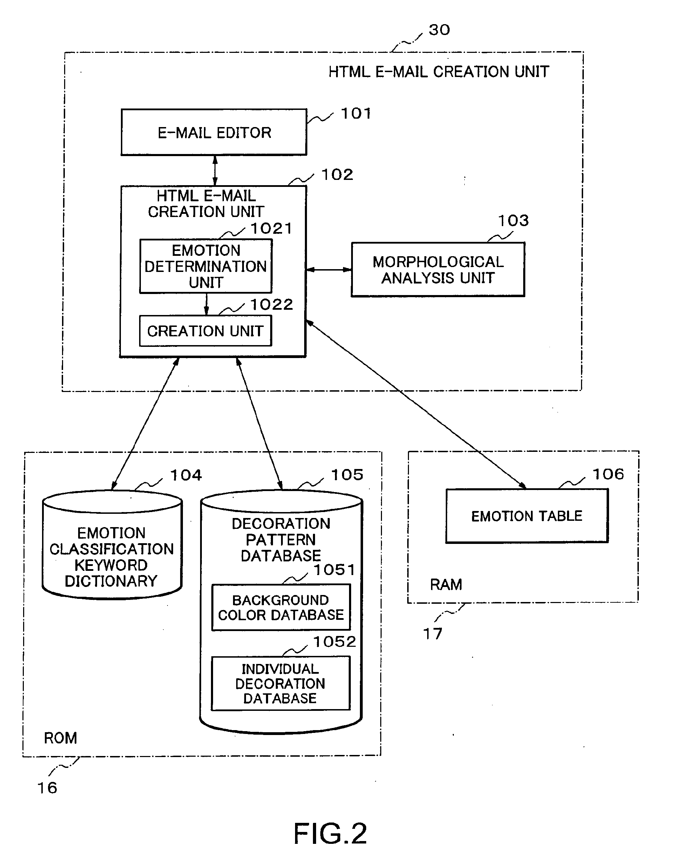

FIG. 2 is a block diagram showing an example of an e-mail creation circuit including the HTML e-mail creation unit 30 of the control circuit 11 shown in FIG. 1.

The HTML e-mail creation unit 30 includes an e-mail editor 101, a HTML e-mail creation unit 102, and a morphological analysis unit 103. The ROM 16 includes, as information necessary to operate the HTML e-mail creation unit 30, an emotion classification keyword dictionary 104, and a decoration pattern database 105.

The e-mail editor 101 edits text-formatted e-mail and HTML-formatted e-mail.

The HTML e-mail creation unit 102 creates HTML-formatted e-mail based on text-formatted e-mail. The HTML e-mail creation unit 102 includes an emotion determination unit 1021 and a creation unit 1022.

The emotion determination unit 1021 extracts words (character strings) that express emotions from created text-formatted e-mail document information. The emotion determination unit 1021 extracts and determines, based on the extracted words, emotions expressed by the words (in this embodiment, also referred to as an individual emotion expressed by each word) and an emotion expressed by the entire e-mail document information (hereinafter, also referred to as an overall emotion).

The creation unit 1022 extracts and determines a background color based on the determined overall emotion. The creation unit 1022 extracts and determines a decoration pattern corresponding to the determined individual emotion and overall emotion, for the extracted character string expressing an emotion. The creation unit 1022 uses the determined decoration pattern to convert text-formatted e-mail document information to HTML-formatted e-mail document information, and displays the converted HTML-formatted e-mail document information on the display unit 14.

The morphological analysis unit 103 analyzes the body of the text-formatted e-mail to extract each word (character string).

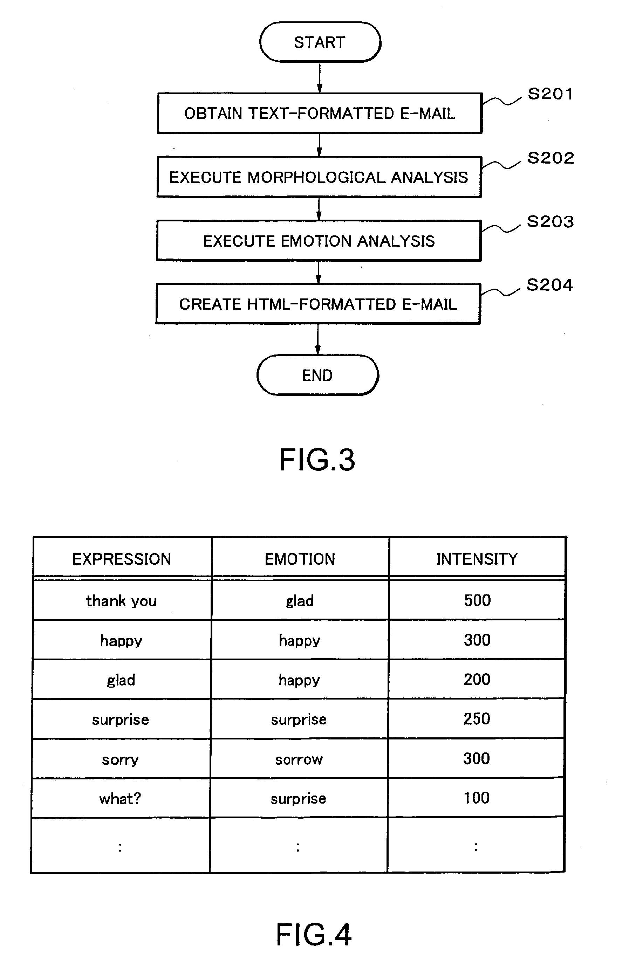

The emotion classification keyword dictionary 104 is allocated in the ROM 16. The emotion classification keyword dictionary 104 classifies and stores emotions so as to correspond to the words (character strings) extracted by the morphological analysis unit 103. To be specific, for example, the emotion classification keyword dictionary 104 includes, for each emotional expression, an emotion corresponding to the emotional expression and an intensity thereof, as shown in FIG. 4. In this case, words (character strings) described in an emotional expression field correspond to the words (character strings) which have been extracted by the morphological analysis unit 103. An emotion field describes emotions expressed by the words (character strings). An intensity field describes the strength of each of emotions expressed by words (character strings). In FIG. 4, a higher value shows a stronger emotion.

The decoration pattern database 105 is allocated in the ROM 16. The decoration pattern database 105 holds HTML decoration patterns corresponding to the classified emotions. The decoration patterns includes decoration of the entire background color and decoration of each word expressing an emotion. For this reason, the decoration pattern database 105 includes a background color database 1051 and an individual decoration database 1052.

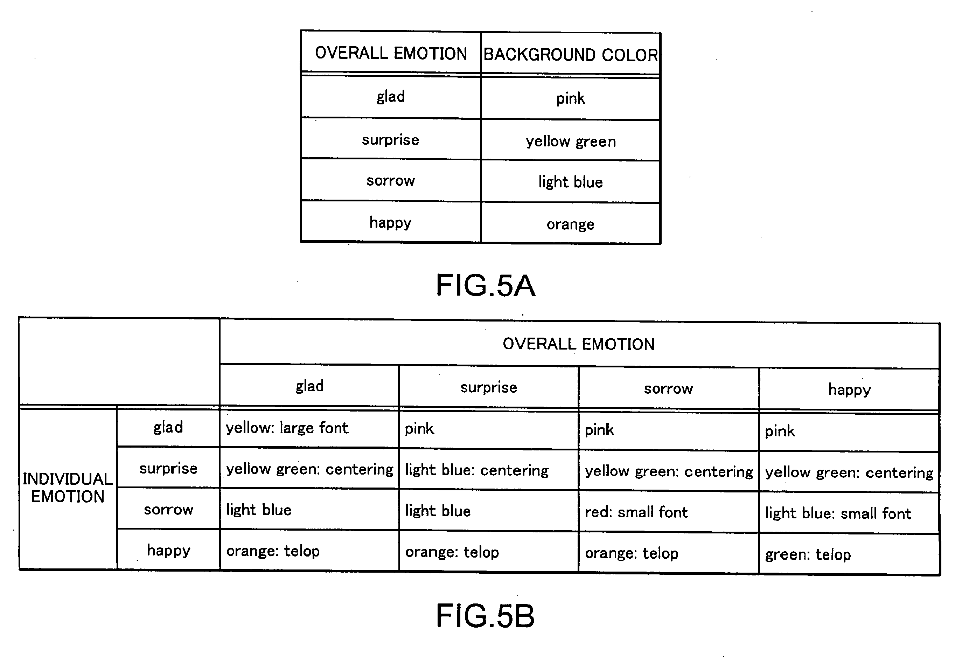

The background color database 1051 stores a background color corresponding to each of overall emotions. To be specific, for example, the background color database 1051 includes background colors corresponding respectively to overall emotions, as shown in FIG. 5A. Note that the overall emotion indicates an emotion expressed by entire e-mail document information.

The individual decoration database 1052 stores, for each individual emotion, decoration patterns (for example, a color, a font size, display representation, and arrangement) corresponding to each of the overall emotions. To be specific, for example, the individual decoration database 1052 includes, for each individual emotion, decoration patterns corresponding to the individual emotion and the overall emotion, as shown in FIG. 5B. The word (character string) for which the decoration of the telop in Fig. 5B is specified displays as the word flows from the right to the left by one character within the range of the word on the screen of display unit 14, and repeats this. In addition, when the word for which the decoration of the telop is specified continues, the entire continuing word becomes the object of the telop.

The morphological analysis unit 103 divides document information described in text format within the body of e-mail into respective words. In this case, an operation of the morphological analysis unit 103 is to divide a text sentence into morphemes to extract minimum character strings.

Here, a morpheme indicates a minimum character string which can indicate a certain meaning. The text format indicates a data format configured by just characters which-have neither layout information nor decoration information. The hypertext markup language (HTML) is a markup language developed based on a standard generalized markup language (SGML), and is used to create a web page and for other purposes. The SGML is the standard for expressing documents in an electronic format, which has been developed in the U.S. in the 1960s.

When a character string expressing an emotion is found upon input of HTML e-mail document information, the HTML e-mail creation unit 30 decorates the character string according to the emotion, and displays the document information including the decorated character string on the display unit 14. In this case, the HTML e-mail creation unit 30 extracts,' based on extracted character strings, emotions of delight, anger, sorrow and pleasure expressed by the character strings and their intensities, from the decoration pattern database 105. Then, the HTML e-mail creation unit 30 extracts, as an overall emotion of the e-mail document information, an emotion having the highest intensity value from among the extracted character strings. Further, the HTML e-mail creation unit 30 extracts decoration patterns from the decoration pattern database 105 based on the emotions of delight, anger, sorrow and pleasure expressed by the character strings and the overall emotion of the e-mail document information, and uses the extracted decoration patterns to decorate the character strings.

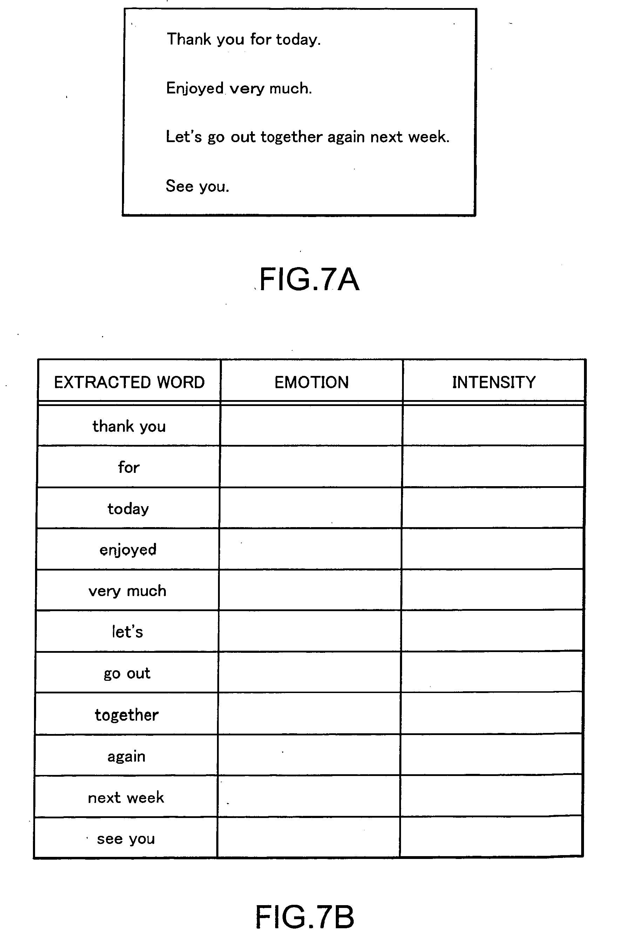

Next, an entire operation according to this embodiment will be described in detail by referring mainly to FIGS. 3 and 7A to 7D.

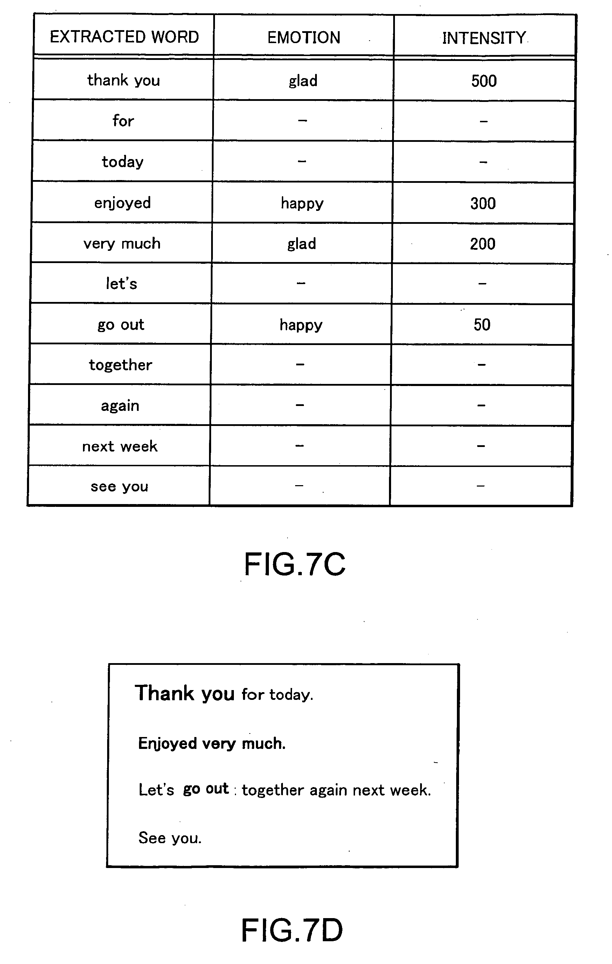

FIG. 3 is a flowchart showing an operation of the HTML e-mail creation unit 30 shown in FIG. 2.. To be specific, the flowchart shows an operation performed when the control circuit 11 executes the HTML e-mail creation program 161. FIG. 7A shows the contents of main body of text-formatted e-mail. FIG. 7B shows the contents of an emotion table 106 obtained after words extracted from the main body shown in FIG. 7A are written in an extracted word field of the emotion table 106. FIG. 7C shows the contents of the emotion table 106 obtained after emotions and intensities extracted from the emotion classification keyword dictionary 104 by using the words written in FIG. 7B as keys are written in the emotion table 106. FIG. 7D shows the contents of a main body of HTML-formatted e-mail which has been converted from the main body of text-formatted e-mail shown in FIG. 7A.

First, when the operator selects "e-mail creation" from a menu screen displayed on the display unit 14 of the portable terminal 1 in order to create HTML-formatted e-mail, the control circuit 11 executes the e-mail editor 101. The e-mail editor 101 instructs the operator to input a main body of text-formatted e-mail through the display unit 14 and the key operation unit 15. When the operator finishes to create the text-formatted e-mail (see FIG. 7A, for example) , the e-mail editor 101 passes the created text-formatted e-mail (FIG. 7A) to the HTML e-mail creation unit 102 (step S201 of FIG. 3).

The HTML e-mail creation unit 102 passes the text-formatted e-mail (FIG. 7A) to the morphological analysis unit 103. The morphological analysis unit 103 extracts each word from the main body of the text-formatted e-mail, and passes information extracted on a word basis to the HTML e-mail creation unit 102. The HTML e-mail creation unit 102 receives the information extracted on a word basis as extracted words (step S202 of FIG. 3).

The HTML e-mail creation unit 102 which has received the extracted words passes control to the emotion determination unit 1021.

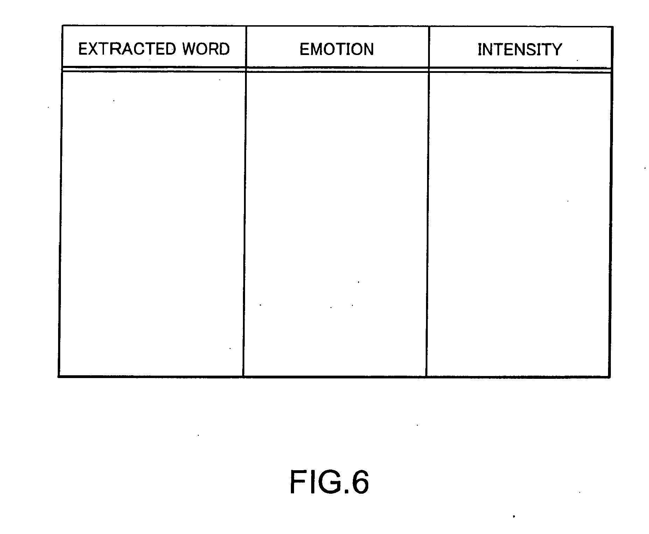

The emotion determination unit 1021 in the HTML e-mail creation unit 102 receives the extracted words, creates the emotion table 106 (see FIG. 6, for example) in the RAM 17 to secure a work area, and writes the extracted words from the top of the extracted word field of the emotion table 106. The emotion table 106 which the extracted words have been written in the extracted word field is indicated as in FIG. 7B, for example.

The emotion determination unit 1021 uses each of the extracted words as a key to search the emotion classification keyword dictionary 104 (FIG. 2), and extracts an emotion and an intensity each corresponding to each of the extracted words. Further, the emotion determination unit 1021 writes the emotion and the intensity corresponding to each of the extracted words in the emotion field and the intensity field of the emotion table 106 to complete the emotion table 106 (see FIG. 7C, for example). In other words, the emotion determination unit 1021 now determined individual emotions for words each expressing an emotion by completing the emotion table 106. For example, in FIG. 7C, an emotion "glad" indicates an individual emotion corresponding to words "thank you" and "verymuch", and an emotion "happy" indicates an individual emotion corresponding to words "enjoyed" and "go out". In FIG. 7C, a hyphen "-" is shown in the emotion field and the intensity field of the emotion table 106 when there is no individual emotion corresponding to the extracted word. Therefore, the main body of e-mail shown in FIG. 7A includes four words each expressing an emotion. Note that the hyphen "-" shown in the emotion table 106 may be "0" or a blank or an identification information to indicate " not registered".

Next, the emotion determination unit 1021 judges whether one or plural words expressing emotions is found in the emotion table 106 or not by searching the intensity field of the emotion table 106. If the one or plural words is found, the emotion determination unit 1021, a word having the highest emotion intensity and an emotion corresponding to the word are extracted from among the extracted words in the completed emotion table 106. In this case, the emotion determination unit 1021 judges that the emotion corresponding to the extracted emotion corresponding to the highest intensity indicates an emotion of an overall e-mail message (step S203 of FIG. 3). The judgment made by the emotion determination unit 1021 leads to determination of the overall emotion of an e-mail document information.

In other words, referring to the emotion table 106 of FIG. 7C, the word "thank you" having an intensity of 500 indicates the emotion "glad". The emotion determination unit 1021 determines the emotion "glad" as the emotion of the overall e-mail message.

FIG. 5A is a diagram showing a configuration example of the background color database 1051 included in a decoration pattern database 105 shown in FIG. 2. FIG. 5B is a diagram showing a configuration example of the individual decoration database 1052 included in the decoration pattern database 105.

Next, the emotion determination unit 1021 passes control to the creation unit 1022. The creation unit 1022 of the HTML e-mail message creation unit 102 searches the background color database 1051 (FIG. 5A) included in the decoration pattern database 105 (FIG. 2) with using the determined overall emotion as a key, and extracts and determines a corresponding overall background color. The creation unit 1022 further searches the individual decoration database 1052 (FIG. 5B) with using the individual emotion and overall emotion of the extracted word as keys, and extracts a corresponding overall decoration pattern. In this case, the creation unit 1022 sets the emotion corresponding to the extracted word registered in the emotion table 106 as an individual emotion, and searches the individual decoration database 1052 with using the individual emotion and the determined overall emotion as keys, and extracts the decoration pattern corresponding to each extracted word (word) from the individual decoration database 1052, thereby determining the decoration pattern. Accordingly, the creation unit 1022 reflects the determined background color on an e-mail message and reflects the determined decoration pattern on each of words expressing various emotions, to thereby convert a text-format e-mail message into a HTML-formatted e-mail message. Then, the creation unit 1022 displays the HTML-formatted e-mail message thus created on the display unit 14 (step S204 of FIG. 3).

Finally, the creation unit 1022 returns control to the HTML e-mail message creation unit 102. Then, the e-mail message creation unit 102 returns the HTML e-mail message created through conversion (FIG. 7D) to the e-mail editor 101 (FIG. 2), which ends the processing (step S205 of FIG. 3).

As described above, the control circuit 11 performs morphological analysis to divide a text-formatted e-mail message into respective words, and searches the emotion classification keyword dictionary 104 and the decoration pattern database 105 based on the extracted words to thereby extract decoration patterns, which makes it possible to automatically create a HTML-formatted e-mail message. To be specific, an operator does not need to repeat work of selecting the words to be stressed and changing the decoration type to be applied thereto; and the embodiment of the present invention allows the troublesome work to be automatically performed.

In the embodiment described above, only the background color is set as the background of the HTML-formatted e-mail message in correspondence with the emotion of the overall e-mail message. However, in the embodiment, an image database may be prepared in which, in stead of the background color, images are each stored in advance corresponding to each target emotion. In this case, in correspondence with the emotion of the overall e-mail message, the HTML e-mail creation unit 102 searches the image database, extracts an image, and inserts the extracted image as the background. Further, in the embodiment, only one decoration pattern is provided for an extracted emotion. However, several decoration patterns may be provided in advance to offer plural HTML-formatted e-mail messages, so that the user is allowed to select a desired one therefrom.

Although the embodiment has been described by taking as an example a case of using a portable terminal, the present invention can be applied to communication apparatuses such as personal computers that are not portable. Further, when the recording medium 41 in which the HTML e-mail creation program is recorded is delivered, the operator who has a computer provided with a communication function can use the service of HTML e-mail creation by installing the HTML e-mail creation program stored in the recording medium 41 on the computer.

In the embodiment, although the HTML e-mail creation program, the emotion classification keyword dictionary, and the decoration pattern database are stored in the ROM 16, they may be stored in the RAM 17 or a nonvolatile recording medium (for example, magnetic disk) which is not shown.

As described above, upon creation of HTML e-mail document information, when a character string expressing an emotion is found in created text-formatted document information, the control circuit 11 of this embodiment determines an overall emotion of the document information based on the character string. The control circuit 11 of this embodiment further creates HTML-formatted document information in which a decoration pattern corresponding to the determined overall emotion is applied to the character string expressing the emotion. Therefore, in the embodiment, the operator only has to create text-formatted document information to automatically convert it to HTML-formatted document information in which decoration is applied to the character string expressing an emotion. Further, the control circuit 11 displays the created HTML-formatted document information which decoration is applied, so that the operator can see the created HTML-formatted document information, which has been obtained through automatic conversion, before transmitting the e-mail message.

Further, it is the inventor's intent to retain all equivalents of the claimed invention even if the claims are amended during prosecution.

## Claims

1. A HTML e-mail creation system for creating a HTML e-mail message, comprising:
a display unit; and
a control circuit,
wherein the control circuit extracts one or plural character strings expressing emotions from text-formatted document information; determines an overall emotion of HTML e-mail document information based on the one or plural character strings; creates HTML-formatted document information in which decoration corresponding to the determined overall emotion is applied to the one or plural character strings; and controls to display the created HTML-formatted document information on the display unit.

2. The HTML e-mail creation system according to claim 1, further comprising:
a storage in which the one or plural character strings are each stored in association with emotion information including delight, anger, sorrow, and pleasure corresponding to the character string and an intensity value indicating strength of an emotion expressed by the character string,
wherein, in determining the overall emotion, the control circuit searches the storage to extract emotion information and intensity values corresponding to the one or plural character strings, and determines emotion information having a highest intensity value among the extracted intensity values, as the overall emotion.

3. The HTML e-mail creation system according to claim 1, further comprising:
a storage in which the one or plural character strings are each stored in associationwith emotion information including delight, anger, sorrow, and pleasure corresponding to the character string and an intensity value indicating strength of an emotion expressed by the character string; and
a database storing a decoration pattern corresponding to the overall emotion,
wherein, in determining the overall emotion, the control circuit searches the storage to extract emotion information and intensity values corresponding to the one or plural character strings; determines emotion information having a highest intensity value among the extracted intensity values, as the overall emotion; and searches the database based on the determined overall emotion to determine a background color of the HTML e-mail document information.

4. The HTML e-mail creation system according to claim 1, further comprising:
a storage in which the one or plural character strings are each stored in associationwith emotion information including delight, anger, sorrow, and pleasure corresponding to the character string and an intensity value indicating strength of an emotion expressed by the character string; and
a database storing a decoration pattern corresponding to an individual emotion and the overall emotion,
wherein, in determining the overall emotion, the control circuit searches the storage to extract emotion information and intensity values corresponding to the one or plural character strings; determines emotion information having a highest intensity value among the extracted intensity values, as the overall emotion; and sets the extracted emotion information as the individual emotion, and searches, based on the individual emotion and the determined overall emotion, the database to extract a decoration pattern corresponding to the one or plural character strings.

5. A HTML e-mail creation system for creating a HTML e-mail message, comprising:
emotion determination means for extracting one or plural character strings expressing emotions from text-formatted document information, and determining an overall emotion of HTML e-mail document information based on the one or plural character strings; and
creation means for creating HTML-formatted document information in which decoration corresponding to the determined overall emotion is applied to the one or plural character strings, and displaying the created HTML-formatted document on a display unit.

6. The HTML e-mail creation system according to claim 5, further comprising:
a storage in which the one or plural character strings are each stored in association with emotion information including delight, anger, sorrow, and pleasure corresponding to the character string and an intensity value indicating strength of an emotion expressed by the character string,
wherein the emotion determination means searches the storage to extract emotion information and intensity values corresponding to the one or plural character strings, and determines emotion information having a highest intensity value among the extracted intensity values, as the overall emotion.

7. The HTML e-mail creation system according to claim 5, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding to the overall emotion,
wherein the emotion determination means searches the storage to extract emotion information and intensity values corresponding to the one or plural character strings, and determines emotion information having a highest intensity value among the extracted intensity values, as the overall emotion, and
wherein the creation means searches the database based on the determined overall emotion to determine a background color of the HTML e-mail document information.

8. The HTML e-mail creation system according to claim 5, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding to an individual emotion and the overall emotion,
wherein the emotion determination means searches the storage to extract emotion information and intensity values corresponding to the one or plural character strings, and determines emotion information having a highest intensity value among the extracted intensity values, as the overall emotion, and
wherein the creation means sets the extracted emotion information as the individual emotion, and searches, based on the individual emotion and the determined overall emotion, the database to extract a decoration pattern corresponding to the one or plural character strings.

9. A communication apparatus for creating a HTML e-mail message, comprising:
a transmission and reception circuit for transmitting and receiving a HTML e-mail message;
a control circuit controlled by a program performed by a CPU; and
a display unit for displaying HTML e-mail document information,
wherein the control circuit extracts one or plural character strings expressing emotions from text-formatted document information; determines an overall emotion of HTML e-mail document information based on the one or plural character strings; creates HTML-formatted document in which decoration corresponding to the determined overall emotion is applied to the one or plural character strings; and controls to display the created HTML-formatted document information on the display unit.

10. The communication apparatus according to claim 9, further comprising:
a storage in which the one or plural character strings are each stored in associationwith emotion information including delight, anger, sorrow, and pleasure corresponding to the character string and an intensity value indicating strength of an emotion expressed by the character string,
wherein, in determining the overall emotion, the control circuit searches the storage to extract emotion information and intensity values corresponding to the one or plural character strings, and determines emotion information having a highest intensity value among the extracted intensity values, as the overall emotion.

11. The communication apparatus according to claim 9, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding to the overall emotion,
wherein, in determining the overall emotion, the control circuit searches the storage to extract emotion information and intensity values corresponding to the one or plural character strings; determines emotion information having a highest intensity value among the extracted intensity values, as the overall emotion; and searches the database based on the determined overall emotion to determine a background color of the HTML e-mail document information.

12. The communication apparatus according to claim 9, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding-to an individual emotion and the overall emotion,
wherein, in determining the overall emotion, the control circuit searches the storage to extract emotion information and intensity values corresponding to the one or plural character strings; determines emotion information having a highest intensity value among the extracted intensity values, as the overall emotion; and sets the extracted emotion information as the individual emotion, and searches, based on the individual emotion and the determined overall emotion, the database to extract a decoration pattern corresponding to the one or plural character strings.

13. A communication apparatus for creating a HTML e-mail message, comprising:
emotion determination means for extracting one or plural character strings expressing emotions from text-formatted document information, and determining an overall emotion of HTML e-mail document information based on the one or plural character strings; and
creation means for creating HTML-formatted document information in which decoration corresponding to the determined overall emotion is applied to the one or plural character strings, and displays the created HTML-formatted document information on the display unit.

14. The communication apparatus according to claim 13, further comprising:
a storage in which the one or plural character strings are each stored in association with emotion information including delight, anger, sorrow, and pleasure corresponding to the character string and an intensity value indicating strength of an emotion expressed by the character string,
wherein the emotion determination means searches the storage to extract emotion information and intensity values corresponding to the one or plural character strings, and determines emotion information having a highest intensity value among the extracted intensity values, as the overall emotion.

15. The communication apparatus according to claim 13, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding to the overall emotion,
wherein the emotion determination means searches the storage to extract emotion information and intensity values corresponding to the one or plural character strings, and determines emotion information having a highest intensity value among the extracted intensity values, as the overall emotion, and
wherein the creation means searches the database based on the determined overall emotion to determine a background color of the HTML e-mail document information.

16. The communication apparatus according to claim 13, further comprising:
a storage in which the one or plural character strings are each stored in association with emotion information including delight, anger, sorrow, and pleasure corresponding to the character string and an intensity value indicating strength of an emotion expressed by the character string; and
a database storing a decoration pattern corresponding to an individual emotion and the overall emotion,
wherein, in determining the overall emotion, the emotion determination means searches the storage to extract emotion information and intensity values corresponding to the one or plural character strings, ahd
wherein the creation means determines emotion information having a highest intensity value among the extracted intensity values, as the overall emotion, and sets the extracted emotion information as the individual emotion, and searches, based on the individual emotion and the determined overall emotion, the database to extract a decoration pattern corresponding to the one or plural character strings.

17. A HTML e-mail creation method of creating a HTML e-mail message, comprising:
extracting one or plural character strings expressing emotions from text-formatted document information;
determining an overall emotion of HTML e-mail document information based on the one or plural character strings; and
creating HTML-formatted document information in which decoration corresponding to the determined overall emotion is applied to the one or plural character strings.

18. The HTML e-mail creation method according to claim 17, further comprising:
preparing in advance a storage in which the one or plural character strings are each stored in association with emotion information including delight, anger, sorrow, and pleasure corresponding to the character string and an intensity value indicating strength of an emotion expressed by the character string;
searching, in determining the overall emotion, the storage to extract emotion information and intensity values corresponding to the one or plural character strings; and
determining emotion information having a highest intensity value among the extracted intensity values, as the overall emotion.

19. The HTML e-mail creation method according to claim 17, further comprising:
preparing in advance a storage in which the one or plural character strings are each stored in association with emotion information including delight, anger, sorrow, and pleasure corresponding to the character string and an intensity value indicating strength of an emotion expressed by the character string; and a database storing a decoration pattern corresponding to the overall emotion,
searching, in determining the overall emotion, the storage to extract emotion information and intensity values corresponding to the one or plural character strings;
determining emotion information having a highest intensity value among the extracted intensity values, as the overall emotion; and
searching the database based on the determined overall emotion to determine a background color of the HTML e-mail document information.

20. The HTML e-mail creation method according to claim 17, further comprising:
preparing in advance a storage in which the one or plural character strings are each stored in association with emotion information including delight, anger, sorrow, and pleasure corresponding to the character string and an intensity value indicating strength of an emotion expressed by the character string; and a database storing;a decoration pattern corresponding to an individual emotion and the overall emotion,
searching, in determining the overall emotion, search the storage to extract emotion information and intensity values corresponding to the one or plural character strings;
determining emotion information having a highest intensity value among the extracted intensity values, as the overall emotion; and
setting the extracted emotion information as the individual emotion, and searching, based on the individual emotion and the determined overall emotion, the database to extract a decoration pattern corresponding to the one or plural character strings.

21. A recording medium which stores a program for creating a HTML e-mail message, wherein the program cause a computer to execute the processings of:
extracting one or plural character strings expressing emotions from text-formatted document information,
determining an overall emotion of HTML e-mail document information based on the one or plural character strings; and
creating HTML-formatted document information in which decoration corresponding to the determined overall emotion is applied to the one or plural character strings.

22. The recording medium according to claim 21, wherein the program further cause the computer to execute the processings of:
storing a storage in which the one or plural character strings are each stored in association with emotion information including delight, anger, sorrow, and pleasure corresponding to the character string and an intensity value indicating strength of an emotion expressed by the character string;
searching, in determining the overall emotion, the storage to extract emotion information and intensity values corresponding to the one or plural character strings; and
determining emotion information having a highest intensity value among the extracted intensity values, as the overall emotion.

23. The recording medium according to claim 21, wherein the program further cause the computer to execute the processings of:
storing a storage in which the one or plural character strings are each stored in association with emotion information including delight, anger, sorrow, and pleasure corresponding to the character string and an intensity value indicating strength of an emotion expressed by the character string, and a database storing a decoration pattern corresponding to the overall emotion;
searching, in determining the overall emotion, the storage to extract emotion information and intensity values corresponding to the one or plural character strings;
determining emotion information having a highest intensity value among the extracted intensity values, as the overall emotion; and
searching the database based on the determined overall emotion to determine a background color of the HTML e-mail document information.

24. The recording medium according to claim 21, wherein the program further cause the computer to execute the processings of:
storing a storage storing in which the one or plural character strings are each stored in association with emotion information including delight, anger, sorrow, and pleasure corresponding to the character string and an intensity value indicating strength of an emotion expressed by the character string, and a database storing a decorationpattern corresponding to an individual emotion and the overall emotion;
searching, in determining the overall emotion, the storage to extract emotion information and intensity values corresponding to the one or plural character strings;
determining emotion information having a highest intensity value among the extracted intensity values, as the overall emotion; and
setting the extracted emotion information as the individual emotion, and searching, based on the individual emotion and the determined overall emotion as, the database to extract a decoration pattern corresponding to the one or plural character strings.
